# EUROPEAN PATENT SPECIFICATION

(11) **EP 2 144 420 B1**
(45) Date of publication and mention of the grant of the patent: **22.06.2011**
(21) Application number: 08159796.5
(22) Date of filing: 07.07.2008
(51) Int. Cl.: H04L 29/06

(54) **Web application security filtering**
Sicherheitsfilterung für eine Internetanwendung
Filtrage de sécurité d'application Web

(43) Date of publication of application: 13.01.2010
(73) Proprietor: Barracuda Networks AG, 8005 Zürich (CH)
(72) Inventor: Osterwalder, Cyrill, 8447 Dachsen (CH)
(74) Representative: Stocker, Kurt

(56) References cited:
- US-A1- 2006 288 220
- US-A1- 2008 256 612
- US-B1- 6 915 454
- SCOTT D ET AL: "Specifying and Enforcing Application-Level Wweb Security Policies" IEEE TRANSACTIONS ON KNOWLEDGE AND DATA ENGINEERING, IEEE SERVICE CENTER, LOS ALAMITOS, CA, US, vol. 15, no. 4, 1 July 2003 (2003-07-01), pages 771-783, XP003005117 ISSN: 1041-4347

## Description

### Technical Field

The present invention relates to the field of Web application security filtering. More particularly, this invention relates to filtering malicious user input data provided in Web application forms or Web application requests (URLs and parameters).

### Background Art

Protocols are conventions or standards that control or enable the connection, communication and data transfer between two computer endpoints, wherein the word computer shall include all devices being able to receive and send digital code. These computer endpoints are defined by URL's in the form of a compact strings of characters, which can be used to represent a resource available on the Internet. Web applications are based on connection, communication and data transfer between such computer endpoints. On the server side application servers and other dynamic content servers such as Web content management systems provide content through a large variety of techniques and technologies typified by the scripting approach. Web browsers can be based on different languages, for example on HTML, Java, XML and XSLT. Widespread are Web applications with at least one computer endpoint in the form of a Web application server and at least one client computer endpoint with a Web browser.

Web applications with interactions of Web browsers and Web servers can use content description languages, for example HTML (Hyper Text Markup Language), to display Web pages and to make requests. On the client side, the Web application access is typically initiated by using a Web browser (e.g. Mozilla, Firefox, Internet Explorer, Opera, etc). The Web browser sends a HTTP (Hyper Text Transfer Protocol) request to the Web server in order to receive the HTTP response to the request. The response contains the content description language HTML which tells the Web browser what content to display and how to interact with the Web application, for example by displaying Web forms, Web links or other Web application content.

US 6 345 300 B1 discloses a method for obtaining a user-controlled parameter from a client device arranged behind a network proxy. This method includes the steps of content servers receiving through a network proxy a request originated by the client device, transmitting a responsive request to the client device, wherein the responsive request includes a query mechanism to elicit a user-controlled parameter from the client device, and receiving the user-controlled parameter from the client device. This solution does not prevent the content servers from hacker attacks.

Available as prior art are methods known as reverse proxy servers that intercept the HTTP requests coming from the client browser before it reaches the Web application server. The reverse proxy server may be used to check the request for validity and decide to which Web application server the request should be sent. If the communication between the client browser and the Web application server is encrypted using the SSL (Secure Socket Layer) protocol, the reverse proxy terminates the SSL connection layer in order to be able to inspect the HTTP protocol inside.

US 6'041'355 describes a method of controlling the transfer of data between a first and a second computer network comprising parsing content description language received from the first computer network by the second computer network to determine current tag information within the content description language. A completion decision is made based upon the current tag information. The completion decision may include full data transfer between the two networks, partial data transfer between the two networks, a deferred data transfer at a later time, or a cached data transfer. Restrictions based upon a user's age, a user's access rights, cost, system resources, and time of day may also be employed to limit the transfer of data based upon the current tag information. The content description language is HTML and the method may be practiced by an application level proxy that is part of a firewall system protecting the second computer network from the first. The described method allows restrictions of the data transfer but does not protect Web application servers against active hacking attempts against Web application servers.

There are Web application firewalls or reverse proxy servers which are parsing the content description language HTML in order store information about the content on the Web application firewall or reverse proxy server as a dynamic configuration policy which can be used for security reasons. The stored security information is variable and therefore the security checks to the same content description language information may be different. These approaches are based on the parsing of the content description but due to variable stored security information don't protect Web application servers all the time in the same way against active hacking attempts. A further disadvantage is the need of storing, and updating information about the content on the Web application firewall or reverse proxy server.

There are static solutions, where an administrator has to set up security information on the Web application firewall or reverse proxy server. The disadvantage of such a solution is the static nature of the security information and the need for an administrator setting up and maintaining the security information.

US 6 915 454 B1 and Scott D. et al, "Specifying and Enforcing Application-Level Web Security Policies", IEEE Transactions on Knowledge and Data Engineering, IEEE Service Center, Los Alamitos, CA, US, vol. 15, no. 4, 1 July 2003 (2003-07-01), pages 771-783, XP003005117, ISSN: 1041-4347 disclose server-side objects that validate the input data received by the server. The validation parameters specify the validation criteria against which the input data is validated. The need to store and update validation parameters is costly and cannot prevent inconsistent checking.

US 2003/0154296 A1 discloses a key word restriction facility established between a Web browser and the internet. Connected to the internet is a Web server which provides various services. The key word restriction facility includes a restricted word database and is blocking request messages with a restricted word. The maintenance of the database is time consuming and does not prevent the Web server from hacker attacks.

When client Web browsers (e.g. Firefox, Internet Explorer, Opera, etc) access a Web application server they receive HTML content which describes what the browser should display and what kind of requests and user inputs are expected by the Web application. On the client side, however, there is no secure environment to make sure that these constraints are always complied with. Malicious user inputs may represent a form of hacking attempts against the Web application.

### Summary of the Invention

User input elements and/or URLs in a content description language (for example HTML) are passing by a security service. The security service is preferably installed on a Web application firewall or on a reverse Web proxy server that is placed in front of Web application servers in order to protect the servers from hacking attempts. For validating URLs, user inputs or parameters of requests the content description language of the request is enriched by the security service with at least one additional security token that is dynamically created and based on the content being transferred. The user receives the enriched information and sends back input data together with the security token(s). The security service, which added the security tokens, can then verify all provided user input data against the constraints described in the security token. This solution guarantees that the information used for verifying the user input fits to the request to which the user input was sent.

Due to the fact that at least one security token is added by the security service, is transmitted to the user and back to the security service and is used by the security service for the security check, there can be no mismatch or inconsistent checking. An other advantage is the fact that the there is no need for the security service to store and update security information.

The security service can be installed or implemented on the Web application firewall or on the reverse Web proxy server. The security service could also be installed on a Web application server, wherein such a solution increases the security but is not able to block hacking attempts before reaching the server.

If the new and inventive Web application security filtering is made by a security service at a Web application firewall or a reverse Web proxy server then the blocking is made at the Web application firewall or at the reverse Web proxy server and not at the Web application server. The Web application server will not suffer under attacks with a huge number of incorrect responses to requests since these incorrect responses will be blocked and will not reach the Web application server.

The invention can be adjusted to different situations. For example it would be possible that a request from a Web Application server is passing through a security service at a first Web application firewall or a first reverse Web proxy server and the input to the request is passing through a security service at a second Web application firewall or a second reverse Web proxy server. The information needed by the security service for filtering is in the security token and therefore the security service can be installed at different devices preferably at different Web application firewalls or different reverse Web proxy servers. The security service parsing the input information has to be able to decrypt and verify the security token encrypted and digitally signed by the security service at an other device. The different devices with the security service don't need to have the same constraint information stored since the constraint information is embedded within the HTML content.

The described method parses the content description language when being transferred from the Web application server to the client. Based on HTML tags and the corresponding attributes of these tags, the method creates encrypted security tokens for example with digital signatures that are embedded into the Web form of the content description language in such a way that the client browser will send the security token back to the server again when submitting the Web form with the provided user input data. The security tokens can be perfectly protected against hackers and are added to the content description language sent to and from the user.

The expected value types and allowed value ranges are included in the security token and can therefore be deleted form the content description language sent to the second computer endpoint. In the case of encrypted security tokens possible hackers don't get information on allowed value ranges.

As a result, the method can block the HTTP request or create log messages or notification events to react on violations of the user input data compared to the constraints in the security token. This security filtering is efficient and simple.

With encryption, hash functions and digital signatures the security tokens can be protected from attacks or misuse.

The method for Web application security filtering is applied to Web applications wherein content description language is transferred between at least a first and a second computer endpoint through a security service. The method comprises the steps of
a) the security service receiving from the first computer endpoint content description language including at least one request for input data and at least one constraint to the expected input data,
b) the security service enriching the content description language sent by the first computer endpoint with at least one security token that is based on the at least one request for input data and is including at least one constraint to the expected input data,
c) the security service sending to the second computer endpoint content description language enriched with the at least one security token,
d) the security service receiving from the second computer endpoint input data together with the at least one security token,
e) the security service parsing input data and the at least one security token sent by the second computer endpoint,
f) the security service verifying the input data against the at least one constraint included in the security token and
g) the security service blocking the transfer of input data which does not conform to the at least one constraint.

In a preferred embodiment the at least one first computer endpoint includes at least one Web application server, the at least one second computer endpoint includes a client computer with a Web browser and the security service is installed on a Web application firewall or on a reverse Web proxy server that is placed in front of the at least one Web application server in order to protect the at least one server from hacking attempts by client Web browsers.

In a preferred embodiment the transferred content description language includes HTML content.

The security service is parsing the content description language coming from the at least one first computer endpoint, is extracting attribute information that describes URL's, parameter names, expected value types and allowed value ranges and is creating at least one security token that is based on the extracted attribute information.

Before enriching the content description language with the security token, the security service is encrypting and preferably digitally signing the security token. After receiving input data and the at least one security token sent by the second computer endpoint, the security service is decrypting and preferably verifying the security token. The step of verifying the security token is a control step which guarantees that the security token was created by the security service. This prevents hackers from adding security tokens which could be accepted by the security service.

The inventive method is implemented in a computer program comprising program code means for performing all the steps made by the security service. This program is run on a computer or on a Web application firewall or on a reverse Web proxy server.

Instead of a computer performing the method steps by a computer program the method steps can be performed by security service processor for Web application security filtering, said processor comprising
a) means for receiving description language transferred between at least a first and a second computer endpoint through the security service processor
b) means for enriching the content description language sent by the first computer endpoint with at least one security token that is based on at least one request for input data and is including at least one constraint to the expected input data,
c) means for sending to the second computer endpoint content description language enriched with the at least one security token,
d) means for receiving from the second computer endpoint input data together with the at least one security token,
e) means for parsing input data and the at least one security token sent by the second computer endpoint,
f) means for verifying the input data against the at least one constraint included in the security token and
g) means for blocking the transfer of input data which does not conform to the at least one constraint.

### Brief description of the figures

Fig. 1 is a schematic block-diagram of a first part of the Web application security filtering with the Web Application Server sending information to a client,
Fig. 2 is a schematic block-diagram of a second part of the Web application security filtering with the client sending information to the Web Application Server,
Fig. 3 is a schematic block-diagram with the Web Application Server sending specific information to a client, and
Fig. 4 is a schematic block-diagram with the client sending back specific information to the Web Application Server.

### Detailed description of preferred embodiments

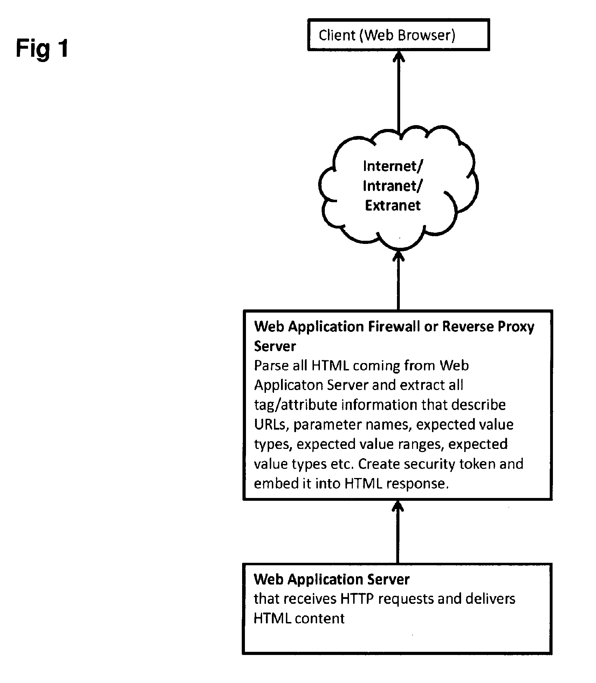

Fig. 1 shows a first part of an embodiment of the Web application security filtering method, wherein a HTML content provided by a Web application server is parsed by security service of a Web application firewall or a reverse Web proxy server. HTML request content and tag or attribute information that is relevant to describe valid URLs, parameters, parameter value types, parameter value ranges etc is extracted. Based on the extracted information, a security token is embedded by the security service of the Web application firewall or the reverse Web proxy server into the HTML code. The security token contains all necessary information to check against the URL or parameter description later and is preferably encrypted and digitally signed. The Web application firewall or reverse Web proxy server does not need to store special information regarding the HTML data or constraints on client inputs.

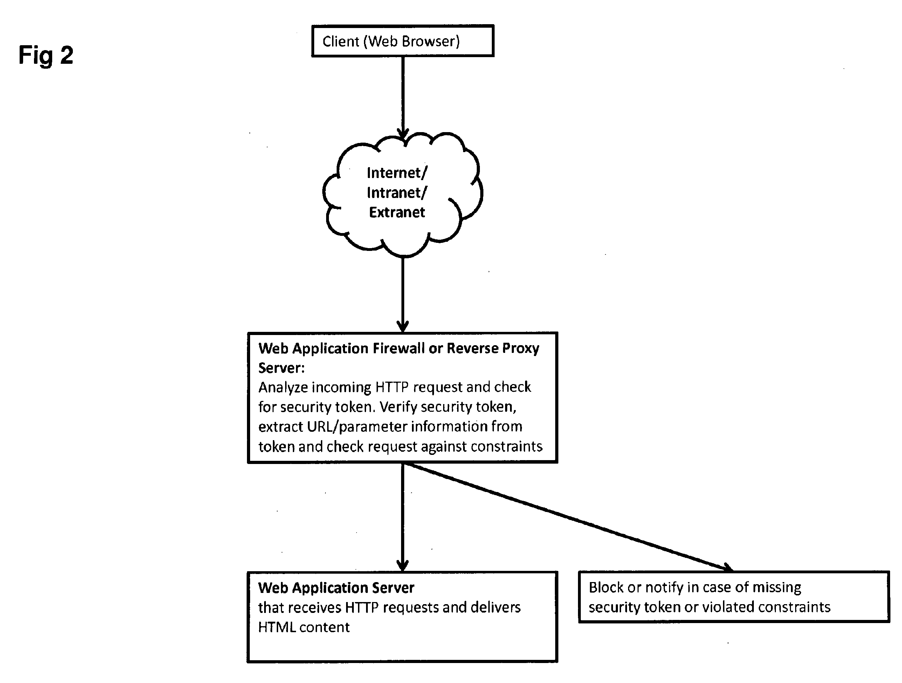

Fig. 2 shows a second part of an embodiment of the Web application security filtering method, which is including the first part of the method shown in Fig. 1. The client Web browser having received HTML content with a security token created in the first part of the method sends the security token together with requested information - for which the security token was created - back to the Web application firewall or the reverse Web proxy server. The input and the security token sent by the browser is parsed by the Web application firewall or the reverse Web proxy server. It decrypts and verifies the security token and extracts the input validation constraints that have been encrypted into the token (e.g. valid URLs, parameter names, parameter value types, parameter value ranges, etc). It checks the request and its parameters against the constraints of the security token and as a result, may react accordingly if constraints are violated. A similar reaction will be cause in case of a missing or a violated security token. The reaction can be blocking the request and/or notify the administrator of the Web Application Servers.

With the new and inventive Web application security filtering the blocking is made at the Web application firewall or the reverse Web proxy server and not at the Web application server. The Web application server will not suffer under attacks with huge numbers of incorrect responses to requests since these incorrect responses will not reach the Web application server.

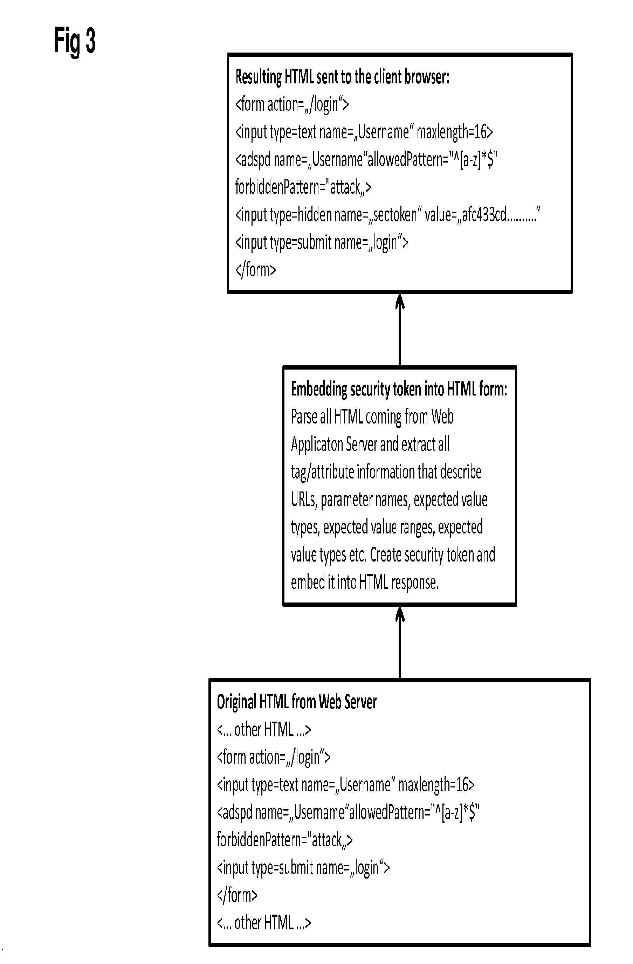

Fig. 3 shows a specific example of the first part of the method shown in Fig. 1 wherein the HTML content being provided by the Web application server includes besides other HTML content login information. The login request includes standard content

```
      <form action="/login">
      <input type=text name="Username" maxlength=16>
      <input type=submit name="login">
      </form>
```

and content information in respect of the security service named "adspd"

```
      <adspd name="Username"allowedPattern ="A [a-z]*$"forbiddenPatern ="attack" >
```

The Web application firewall or the reverse Web proxy server is parsing HTML content in order to find information which will be used by the security service "adspd". This information is extracted and includes constraints relevant to valid URLs, parameters, parameter value types, parameter value ranges etc are. Based on the extracted information, a security token is embedded by the security service of the Web application firewall or the reverse Web proxy server into the HTML code. The security token contains all necessary information to check against the URUparameter description later. The Web application firewall or reverse proxy server device does not need to store special information regarding the HTML data. The HTML code including the security token is sent to the client Web Browser.

When requirements are high with respect to the non-fraudulence of the security token or its creation by a specified security service or by a specified device (Web application firewall or reverse Web proxy server), then a private code is assigned to the specified service or device. Additionally, the specified service or device also has a public code. The security service or the processor of the specified device can determine a hash value from the security token, encode it with a private code, and thus generate a digital signature. The security token and the digital signature, together with the encoded information of the security token, can now be sent along with the combined HTML content. The security token is secure against fraud. Checking the unchanged state of the security token can be done by verifying the digital signature and/or controlling the authentic hash value of the security token by using the public code. If the hash value of the security token is identical with the authentic hash value of the security token, then the security token has not been altered.

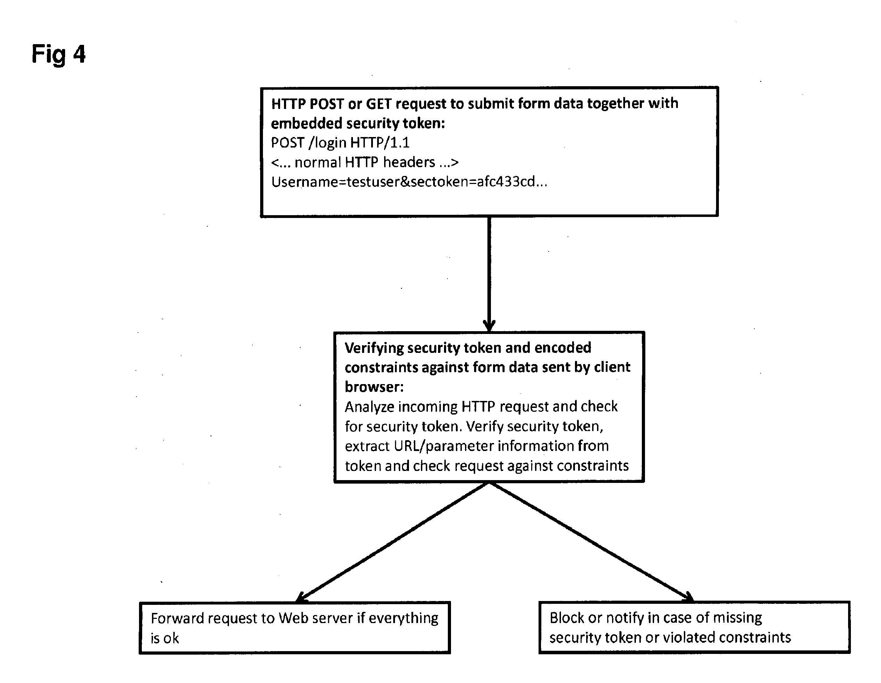

Fig. 4 shows a specific example of second part of the method shown in Fig. 2, wherein a client Web browser, respectively the user at this browser, reacts by sending login information or any kind of parameters for which this behavior was configured or activated. The sent information includes the previously embedded security token. In the first part (Fig. 3) of the method the security token was embedded so that the browser will send it with requested information. The information is sent preferably in encrypted form from the browser to the security service of the Web application firewall or of the reverse Web proxy server, where it is checked for the security token. The security service will decrypt encrypted information, which was sent by the browser.

There might be any kind of checks to make sure that the received information comes from a client responding to HTML content sent by a Web server. The security service decrypts and verifies the security token and extracts the input validation constraints that have been encrypted into the token (e.g. valid URLs, parameter names, parameter value types, parameter value ranges, etc). It checks the request and its parameters against the constraints of the security token and as a result, may react accordingly if constraints are violated for example by blocking the request and/or notify an administrator. If the constraints are not violated, then the request is forwarded to the Web server.

## Claims

1. A method for Web application security filtering in Web applications wherein content description language and input data is transferred between at least a first and a second computer endpoint through a security service comprising the steps of
a) the security service receiving from the first computer endpoint content description language including at least one request for input data and at least one constraint to the expected input data,
b) the security service enriching the content description language sent by the first computer endpoint with at least one security token that is based on the at least one request for input data and is including at least one constraint to the expected input data,
c) the security service sending to the second computer endpoint content description language enriched with the at least one security token,
d) the security service receiving from the second computer endpoint input data together with the at least one security token,
e) the security service parsing input data and the at least one security token sent by the second computer endpoint,
f) the security service verifying the input data against the at least one constraint included in the security token and
g) the security service blocking the transfer of input data which does not conform to the at least one constraint.

2. Method as in claim 1, wherein the at least one first computer endpoint includes at least one Web application server, the at least one second computer endpoint includes a client computer with a Web browser and the security service is installed on a Web application firewall or on a reverse Web proxy server that is placed in front of the at least one Web application server in order to protect the at least one server from hacking attempts by client Web browsers.

3. Method as claimed in claim 1 or 2, wherein the transferred content description language includes HTML content.

4. Method as claimed in one of claims 1 to 3, wherein the security service is parsing the content description language coming from the at least one first computer endpoint, is extracting attribute information that describes URL's, parameter names, expected value types and allowed value ranges and is creating at least one security token that is based on the extracted attribute information.

5. Method as claimed in one of claims 1 to 4, wherein before enriching the content description language with the security token, the security service is encrypting and preferably digitally signing the security token and after receiving input data and the at least one security token sent by the second computer endpoint, the security service is decrypting and preferably verifying the security token.

6. A computer program comprising program code means for performing all the steps made by the security service of any one of the claims 1 to 5 when said program is run on a computer or on a Web application firewall or on a reverse Web proxy server.

7. A security service processor for Web application security filtering, said processor comprising
a) means for receiving content description language transferred between at least a first and a second computer endpoint through the security service processor, wherein the content description language is including at least one request for input data and at least one constraint to the expected input data,
b) means for enriching the content description language sent by the first computer endpoint with at least one security token that is based on the at least one request for input data and is including the at least one constraint to the expected input data,
c) means for sending to the second computer endpoint content description language enriched with the at least one security token,
d) means for receiving from the second computer endpoint input data together with the at least one security token,
e) means for parsing input data and the at least one security token sent by the second computer endpoint,
f) means for verifying the input data against the at least one constraint included in the security token and
g) means for blocking the transfer of input data which does not conform to the at least one constraint.

## Patentansprüche

1. Verfahren für eine Internetanwendungs-Sicherheitsfilterung bei Internetanwendungen, bei denen eine Inhaltsbeschreibungs-Sprache und Eingangsdaten zwischen wenigstens einem ersten und einem zweiten Computer-Endpunkt über einen Sicherheitsdienst übertragen werden, mit den folgenden Verfahrensschritten:
a) der Sicherheitsdienst erhält vom ersten Computer-Endpunkt die Inhaltsbeschreibungs-Sprache mit wenigstens einer Anforderung für Eingangsdaten und wenigstens einer Bedingung für die erwarteten Eingangsdaten,
b) der Sicherheitsdienst bereichert die vom ersten Computer-Endpunkt gesendete Inhaltsbeschreibungs-Sprache mit wenigstens einem Sicherheits-Token, welches auf wenigstens einer Anforderung für Eingangsdaten basiert und wenigstens eine Bedingung für die erwarteten Eingangsdaten umfasst,
c) der Sicherheitsdienst sendet an den zweiten Computer-Endpunkt die mit dem wenigstens einen Sicherheits-Token bereicherte Inhaltsbeschreibungs-Sprache,
d) der Sicherheitsdienst erhält vom zweiten Computer-Endpunkt die Eingangsdaten zusammen mit dem wenigstens einen Sicherheits-Token,
e) der Sicherheitsdienst analysiert die Eingangsdaten und das vom zweiten Computer-Endpunkt gesendete wenigstens eine Sicherheits-Token,
f) der Sicherheitsdienst verifiziert die Eingangsdaten gegenüber der wenigstens einen im Sicherheits-Token eingeschlossenen Bedingung, und
g) der Sicherheitsdienst blockiert die Übertragung von Eingangsdaten, welche der wenigstens einen Bedingung nicht entsprechen.

2. Verfahren nach Anspruch 1, bei dem der wenigstens eine erste Computer-Endpunkt zumindest einen Internetanwendungs-Server umfasst, der wenigstens eine zweite Computer-Endpunkt einen Kundencomputer mit einem Web-Browser umfasst und der Sicherheitsdienst an einem Internetanwendungs-Firewall oder an einem Reverse-Webproxy-Server, der vor dem zumindest einen Internetanwendungs-Server angeordnet ist, um den zumindest einen Server vor Hackerversuchen durch Kunden-Webbrowser zu schützen.

3. Verfahren nach Anspruch 1 oder 2, bei dem die übertragene Inhaltsbeschreibungs-Sprache einen HTML-Inhalt umfasst.

4. Verfahren nach einem der Ansprüche 1 bis 3, bei dem der Sicherheitsdienst die vom wenigstens einen ersten Computer-Endpunkt kommende Inhaltsbeschreibungs-Sprache analysiert, URL's, Parameternamen, erwartete Wertarten und erlaubte Wertbereiche beschreibende Attribut-Information abfragt und wenigstens einen Sicherheits-Token kreiert, der auf der abgefragten Attribut-Information basiert.

5. Verfahren nach einem der Ansprüche 1 bis 4, bei dem vor dem Bereichern der Inhaltsbeschreibungs-Sprache mit dem Sicherheits-Token der Sicherheitsdienst das Sicherheits-Token verschlüsselt, und vorzugsweise digital signiert, und dass nach dem Erhalt der Eingangsdaten und des vom zweiten Computer-Endpunkt gesendeten wenigstens einen Sicherheits-Token der Sicherheitsdienst das Sicherheits-Token entschlüsselt, und vorzugsweise das Sicherheits-Token verifiziert.

6. Computerprogramm mit Programm-Kodierungsmitteln zur Durchführung aller vom Sicherheitsdienst nach einem der Ansprüche 1 bis 5 ausgeführten Verfahrensschritte, wenn das Programm auf einem Computer oder an einem Internetanwendungs-Firewall oder an einem Reverse-Webproxy-Server ablaufen gelassen wird.

7. Sicherheitsdienst-Prozessor für eine Internetanwendungs-Sicherheitsfilterung, wobei der Prozessor folgendes aufweist:
a) Mittel zum Erhalten einer zwischen wenigstens einem ersten und einem zweiten Computer-Endpunkt über den Sicherheitsdienst-Prozessor übertragenen Inhaltsbeschreibungs-Sprache, wobei die Inhaltsbeschreibungs-Sprache wenigstens eine Anforderung für Eingangsdaten und wenigstens eine Bedingung für die erwarteten Eingangsdaten umfasst,
b) Mittel zum Bereichern der vom ersten Computer-Endpunkt gesendeten Inhaltsbeschreibungs-Sprache mit wenigstens einem Sicherheits-Token, welches auf der wenigstens einen Anforderung für Eingangsdaten basiert und die wenigstens eine Bedingung für die erwarteten Eingangsdaten umfasst,
c) Mittel zum Senden der mit dem wenigstens einen Sicherheits-Token bereicherten Inhaltsbeschreibungs-Sprache an den zweiten Computer-Endpunkt,
d) Mittel zum Erhalten von Eingangsdaten zusammen mit dem wenigstens einen Sicherheits-Token vom zweiten Computer-Endpunkt,
e) Mittel zum Analysieren der Eingangsdaten und des vom zweiten Computer-Endpunkt gesendeten wenigstens einen Sicherheits-Tokens,
f) Mittel zum Verifizieren der Eingangsdaten gegenüber der wenigstens einen im Sicherheits-Token eingeschlossenen Bedingung, und
g) Mittel zum Blockieren die Übertragung von Eingangsdaten, welche der wenigstens einen Bedingung nicht entsprechen.

## Revendications

1. Méthode de filtrage de sécurité d'application Web dans des applications Web, où un langage de description de contenu et des données d'entrée sont transférés entre au moins une première et une deuxième extrémité à ordinateur à travers un service de sécurité, comprenant les étapes suivantes :
a) le service de sécurité reçoit le langage de description de contenu incluant au moins une demande pour des données d'entrée et au moins une condition secondaire pour les données d'entrée attendues par la première extrémité à ordinateur,
b) le service de sécurité enrichit le langage de description de contenu émis par la première extrémité à ordinateur avec au moins un jeton de sécurité, qui est basé à l'au moins une demande pour des données d'entrée, et qui inclut au moins une condition secondaire pour les données d'entrée attendues,
c) le service de sécurité émit le langage de description de contenu enrichi avec l'au moins un jeton de sécurité à la deuxième extrémité à ordinateur,
d) le service de sécurité reçoit des données d'entrée conjointement avec l'au moins un jeton de sécurité par la deuxième extrémité à ordinateur,
e) le service de sécurité analyse les données d'entrée et l'au moins un jeton de sécurité émis par la deuxième extrémité à ordinateur,
f) le service de sécurité vérifie les données d'entrée par rapport l'au moins une condition secondaire inclus dans le jeton de sécurité, et
g) le service de sécurité bloque le transfert des données d'entrée, qui ne sont pas en conformité avec l'au moins une condition secondaire.

2. Méthode selon la revendication 1, dans laquelle l'au moins une première extrémité à ordinateur inclut au moins un serveur d'application Web, l'au moins une deuxième extrémité à ordinateur inclut un ordinateur de client comprenant un navigateur Web, et le service de sécurité est installé à un coupe-feu d'application Web ou à un serveur Web reverse proxy, qui est placé devant l'au moins serveur d'application Web pour sécuriser l'au moins un serveur contre des tentatives à bidouiller par des navigateurs Web de client.

3. Méthode selon la revendication 1 ou 2, dans laquelle le langage de description de contenu transféré inclut un contenu HTML.

4. Méthode selon une quelconque des revendications 1 à 3, dans laquelle le service de sécurité analyse le langage de description de contenu venant de la première extrémité à ordinateur, extrait de l'information par attributs, qui décrit des URLs, des noms de paramètres, les types de valeurs attendus et les domaines de valeurs permis, et crée au moins un jeton de sécurité basé à l'information par attributs extraite.

5. Méthode selon une quelconque des revendications 1 à 4, dans laquelle, avant d'enrichir le langage de description de contenu avec le jeton de sécurité, le service de sécurité crypte, et de préférence signe le jeton de sécurité d'une façon numérique, et après recevoir les données d'entrée et l'au moins un jeton de sécurité émis par la deuxième extrémité à ordinateur, le service de sécurité décrypte, et de préférence vérifie, le jeton de sécurité.

6. Programme d'ordinateur comprenant des moyens de code de programme pour exécuter toutes les étapes faites par le service de sécurité d'une quelconques des revendications 1 à 5, quand ledit programme se déroule à un ordinateur ou à un coupe-feu d'application Web ou à un serveur Web reverse proxy.

7. Processeur de service de sécurité pour le filtrage de sécurité d'application Web, ledit processeur comprenant
a) des moyens pour recevoir un langage de description de contenu transféré entre au moins une première et une deuxième extrémité à ordinateur à travers le processeur de service de sécurité, dans lequel le langage de description de contenu inclut au moins une demande pour des données d'entrée et au moins une condition secondaire pour les données d'entrée attendues,
b) des moyens pour enrichir le langage de description de contenu émis par la première extrémité à ordinateur avec au moins un jeton de sécurité, qui est basé à l'au moins une demande pour des données d'entrée, et qui inclut l'au moins une condition secondaire pour les données d'entrée attendues,
c) des moyens pour émettre le langage de description de contenu enrichi avec l'au moins un jeton de sécurité à la deuxième extrémité à ordinateur,
d) des moyens pour recevoir des données d'entrée conjointement avec l'au moins un jeton de sécurité par la deuxième extrémité à ordinateur,
e) des moyens pour analyser les données d'entrée et l'au moins un jeton de sécurité émis par la deuxième extrémité à ordinateur,
f) des moyens pour vérifier les données d'entrée par rapport l'au moins une condition secondaire inclus dans le jeton de sécurité, et
g) des moyens pour bloquer le transfert des données d'entrée, qui ne sont pas en conformité avec l'au moins une condition secondaire.
